(19) Europäisches Patentamt / European Patent Office / Office européen des brevets

(11) **EP 3 166 198 B1**

(12) **EUROPEAN PATENT SPECIFICATION**

(45) Date of publication and mention
of the grant of the patent:
**14.08.2019 Bulletin 2019/33**

(21) Application number: **15193402.3**

(22) Date of filing: **06.11.2015**

(51) Int Cl.:
*H02J 7/00* (2006.01)     *G01S 19/34* (2010.01)
*H04W 52/02* (2009.01)    *G01R 31/44* (2006.01)
*B60L 3/12* (2006.01)     *B60L 53/66* (2019.01)
*B60L 58/12* (2019.01)    *H02J 7/14* (2006.01)
*G01R 31/36* (2019.01)

(54) **METHOD, DEVICE AND COMPUTER PROGRAM PRODUCT FOR COLLECTING DATA OF A MOBILE DEVICE IN A VEHICLE**

VERFAHREN, VORRICHTUNG UND COMPUTERPROGRAMMPRODUKT ZUR ERFASSUNG VON DATEN EINER MOBILEN VORRICHTUNG IN EINEM FAHRZEUG

PROCÉDÉ, DISPOSITIF ET PRODUIT DE PROGRAMME INFORMATIQUE DESTINÉ À COLLECTER DES DONNÉES D'UN DISPOSITIF MOBILE DANS UN VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.05.2017 Bulletin 2017/19**

(73) Proprietor: **Bayerische Motoren Werke Aktiengesellschaft**
**80809 München (DE)**

(72) Inventors:
• **Chin, Alvin**
  **Chicago, Illinois 60601 (US)**
• **Nallappasoundararajan, Kasthuri Rengan**
  **Schaumburg, Illinois 60193 (US)**
• **Tian, Jilei**
  **Chicago, Illinois 60605 (US)**
• **Tchoi, Won**
  **Schaumburg, Illinois 60193 (US)**

(56) References cited:
US-A- 5 892 346          US-A1- 2002 105 442
US-A1- 2009 315 767      US-B1- 6 975 941
US-B1- 7 359 713         US-B1- 8 655 307

**Description**

The invention relates to a method for collecting data of a mobile device in a vehicle. The invention relates further to a corresponding device. The invention relates further to a computer program and a computer program product for collecting data of the mobile device in a vehicle.

Mobile devices are often used for collecting data, for example, for applications in a vehicle and/or for services of a vehicle manufacturer.

US 2009/0315767 A1 discloses a tracking device for communication of location coordinate information. In one embodiment, the tracking device includes a signal transceiver device, a location coordinate acquisition device, and a computational processor activated and deactivated in accordance with a subscriber service usage profile. The location coordinate acquisition device generates a position fix of the tracking device and a signal transceiver device reports the position fix to a location tracking server. A flash memory device stores a zone management map. In accordance with a fix reporting period based at least in part on a subscriber service usage profile, an internal clock activates or deactivates the signal transceiver device, the computational processor, and/or the location coordinate acquisition device. In one example, the internal clock updates a fix reporting period based on current position fix relative to restricted and allowed areas on the zone management map.

US 50892 346 A discloses a vehicle, which is either an electric vehicle or a hybrid vehicle, capable of achieving low-pollution emissions and saving energy by maximizing use of the capacity of the battery. A navigation ECU receives input identifying a starting location to the stopover location, and a destination where battery charging is planned, and calculates travel distances from the starting location to the stopover location and to the destination based on geographic data for the starting location, the stopover location and the destination, and schedules electric power consumption corresponding to distance travelled, based on the respective calculated distances, to assign a battery residual capacity usage value for each leg of the trip. A vehicle ECU supplies electric power from the battery to the motor in accordance with that schedule.

US 6 975 941 B1 discloses methods and systems for position acquisition and/or monitoring. The position acquisition and/or monitoring can be performed with improved intelligence so that data acquisition, transmission and/or processing is reduced. As a result, the position acquisition and/or monitoring is able to be performed in a power efficient manner.

US 7 359 713 B1 discloses systems and methods to provide power management for a mobile communication device having a location determination function. The frequency of the location determination function may be adjusted based on whether the mobile communication device is moving and may be further adjusted based on battery voltage or expected battery life.

US 2002/0105442 A1 discloses a vehicle tracking unit that may include a vehicle position determining device, a wireless communications device, and a controller. The controller may cooperate with the wireless communications device and the vehicle position determining device for sending vehicle position information to a monitoring station. The controller may also monitor operation of the vehicle, determine a fault condition of at least one of the vehicle position determining device and the wireless communications device based upon a failure thereof over a predetermined pattern of vehicle operation, store the fault condition, and permit retrieval of the stored fault condition.

US8655307B1 discloses a method, wherein usage information associated with a mobile device is collected. The collected information is used to build a usage model for a user of the mobile device that describes a set of contexts in which the mobile device is used. User activity on the device is monitored and the model is consulted to determine a first time after which it will be acceptable for a battery of the mobile device to fall below a threshold charge level. Based on the monitored activity, a prediction of a second time is made for when the battery will fall below the threshold charge level. If the second time is before or a predetermined amount of time before the first time, usage of the battery is reduced, else, usage of the battery is not reduced.

An object of the invention is to provide a method, a device, and a computer program product, which contribute to efficiently collect data of a mobile device in a vehicle.

This object is achieved by the features of the independent claims. Advantageous embodiments of the invention are given in the sub-claims.

The invention is distinguished by a method for collecting data of a mobile device in a vehicle. The invention is further distinguished by a corresponding device for collecting data of the mobile device in a vehicle.

The method comprises the following steps:
A battery charging behaviour model is determined, which is representative for an estimated charging behaviour of the mobile device, with the battery being a mobile device battery, wherein the charging behaviour model is a function of the battery states of charge of the mobile device over time.

The data is collected depending on an actual battery state of charge and the battery charging behaviour model.

A stop threshold value is determined depending on the battery charging behaviour model and the stop threshold value is compared with the actual battery state of charge. If the actual battery state of charge is lower than the stop threshold value the data collection is stopped.

The stop threshold value is determined according to the formula:

stop threshold value = $\beta\sigma$ so that

$$\Delta = \hat{c}_{t+1} - \beta\sigma,$$

wherein $\Delta$ is a remaining amount of battery charge which can be used for data collection, $\hat{c}_{t+1}$ is a determined next start charging battery state of charge, which is determined depending on the battery charging behaviour model, $\beta$ is a given safe coefficient, and $\sigma$ is a standard deviation of the battery charging behaviour model.

By using the stop threshold value it can be assured that a user still can use the mobile device for other applications.

By using the above formula a very exact and self-learning stop threshold value can be determined.

The data to collect comprises, for example, context data, which is used for a given application and/or service. The data to collect comprises, for example, gps information, accelerometer values, gyroscope values, Bluetooth data, etc. The data is, for example, used for applications which help to provide less distractions to a driver and which provide the driver with the right information and the right time, and allows the driver to focus on the task at hand, which is driving. The data thus is used for applications with regards to navigation, finding points of interest, optimizing travel routes with fastest time and cost, and personalizing settings in the vehicle.

By using the charging behaviour model the data in the vehicle can be collected such that the data quality is accurate enough for an appropriate application/service and a sampling frequency is adequate for this application/service, while the mobile device battery consumption is considered and at the same time a good driver experience is provided. Thus, the data of the mobile device in a vehicle is very efficiently collected.

The mobile device is, for example, a smart phone and/or a tablet pc.

According to one embodiment, the battery charging behaviour model is determined depending on former detected start charging times and/or former detected start charging battery states of charge and/or former detected start charging locations.

If the charging times and/or former detected start charging battery states of charge and/or former detected start charging locations are used for the charging behaviour model, it is possible to learn the charging context/location, and infer the charging opportunity, though the user has not charged the device yet. Thus, the charging behaviour model can be used for charging recommendation if the mobile device runs out of battery, or can be integrated in the battery charging habit learning too. Further, the more sources are used for the determination of the charging behaviour model, the more precise the charging behaviour model can be determined.

According to a further embodiment an upper threshold value is determined depending on the battery charging behaviour model and the upper threshold value is compared with the actual battery state of charge. The data is collected depending on the result of the comparison of the upper threshold value with the actual battery state of charge.

As an alternative example, the upper threshold value is for example a given threshold, as 70, 80 or 90 % of a maximum battery state of charge.

According to a further embodiment, the data collection is only started if the actual battery state of charge is higher than or equal to the upper threshold value.

If the data collection is only started if the actual battery state of charge is higher than or equal to the upper threshold value, it can be assured that the data collection is only started if the battery is in a good condition.

According to a further embodiment, a data collection intensity is regulated depending on the result of the comparison of the upper threshold value with the actual battery state of charge.

Data collection intensity refers, for example, to a sample frequency of data collection and/or an accuracy of data collection and/or to the amount of sources of data.

If the data collection intensity is regulated depending on the result of the comparison of the upper threshold value with the actual battery state of charge, it is possible to collect data with a higher data collection intensity if the battery is in a good condition than if the battery is in a not so good condition.

According to a further embodiment, a position of the mobile device is determined. Map data of a road map is provided. The position of the mobile device is compared with the map data, to determine a predicted next point of the mobile device on the road map. A data collection intensity is regulated depending on the predicted next point of the mobile device on the road map.

By using the map data, driver experience can also be used for the data collection. Thus, a very efficient data collection can be achieved.

The map data of a road map comprises, for example, map data of familiar routes, which a driver has taken before, and/or map data of routes of a given map.

According to a further embodiment, if the predicted next point deviates from a road or does not match to a known road the data collection intensity is set to a given first intensity, wherein the known road is a road which a driver has taken before. If the predicted next point maps to a city road the data collection intensity is set to a given second intensity. If the predicted next point maps to a highway the data collection intensity is set to a given third intensity. The given first intensity is higher than the given second intensity and the given second intensity is higher than the given third intensity.

A higher intensity means, for example, a higher frequency of data collection and/or a higher accuracy of data collection and/or more sources of data.

Thus, a high data collection intensity, as, for example, the given first intensity, may comprise a high frequency sampling, e.g. Every 200 m, a high accuracy, e.g. within 10 m and, for example, all context data which is required is collected, e.g. GPS, accelerometer, gyroscope, Bluetooth, etc.

A medium data collection intensity, as, for example, the given second intensity, may comprise a medium frequency sampling in between high and low, e.g. Every 1 km, a high accuracy, e.g. within 10 m, and, for example, all context data which is required is collected, e.g. GPS, accelerometer, gyroscope, Bluetooth, etc.

A low data collection intensity, as, for example, the given third intensity, may comprise a low frequency sampling, for example, only when significant change in location took place, a not so high accuracy, e.g. within 100 m and, for example, only some required context data is collected, e.g. GPS and Bluetooth.

The invention is further distinguished by a computer program product according to claim 9 and a device according to claim 8.

Exemplary embodiments of the invention are explained in the following with the aid of schematic drawings.

These are as follows:

Figure 1     a chart of a battery usage;

Figure 2     a flowchart of a first program; and

Figure 3     a flowchart of second first program.

Elements of same construction or function are marked with the same reference signs in the figures.

In the figures a method, device, computer program and computer program product for collecting data of a mobile device in a vehicle is shown.

The method uses a battery charging behaviour model, which is used to learn a user's history of battery usage and to learn when the user charges a mobile device.

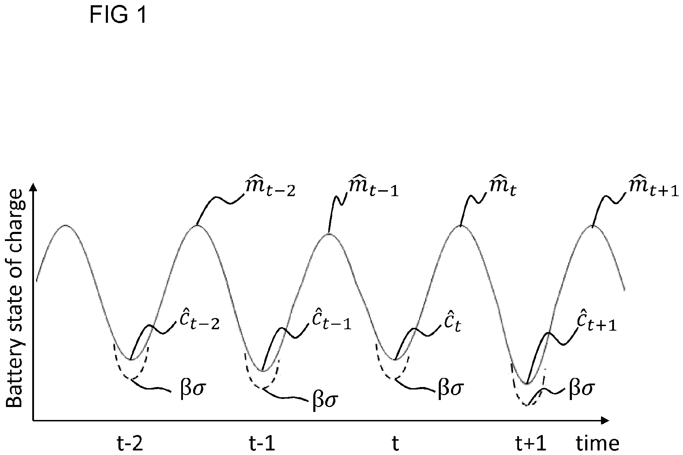

One example of the battery charging behaviour model is shown in figure 1.

For example, the battery charging behaviour model is created based on lowest points in battery usage. The battery charging behaviour model predicts the next battery point when a user will charge the mobile device and calculates remaining battery usage to use for data collection. Further, it is possible to compare the battery charging behaviour model with an actual value to get an error to correct the battery charging model.

Before the battery charging behaviour model is created it is optionally possible to pre-process a normalization.

$\hat{c}_t$ is the observed battery state of charge when the user starts to charge, thus it is the minimum battery level around time t. In reality, the user may not charge to 100%, so the maximum battery level right after $\hat{c}_t$ may be defined as $\hat{m}_t$. So it is possible to normalize $\hat{c}_t$ to be $c_t$, according to the formula:

$$c_t = \frac{\hat{c}_t \hat{m}_{t-1}}{100},$$

wherein $\hat{m}_{t-1}$ is the maximum battery level right after $\hat{c}_{t-1}$.

The user's charging history data may be collected as $c_1, c_2, ..., c_{t-1}, c_t, ...$ where $c_t$ is the battery state of charge at time t to start charging.

There are many possibilities to create the charging behaviour model dependent on the user's charging history data.

For example, auto-regression (AR) can be used. It is also possible to apply moving average (MA), as well as other variation, e.g. introducing differentiator as in autoregressive integrated moving average (ARIMA), to remove the trend and periodic, as described in "Introduction to Time Series and Forecasting" by Peter J. Brockwell Richard A. Davis, Springer Press.

Thus, when using auto-regression (AR), the charging behaviour model can be created by means of the formula

$$c_t = \alpha_0 + \alpha_1 c_{t-1} + \alpha_2 c_{t-2} + \cdots + \alpha_p c_{t-p} + \varepsilon_t,$$

$$= \alpha_0 + \left(\sum_{i=1}^{p} \alpha_i c_{t-i}\right) + \varepsilon_t \quad.$$

Where $\varepsilon_t$ is called white noise with the following constraints:

$$E\left[\varepsilon_t\right] = 0;$$

$$E\left[\varepsilon_t^2\right] = \sigma^2;$$

and

$$E\left[\varepsilon_t \cdot \varepsilon_s\right] = 0; \ t \neq s \ ,$$

Wherein $E[x]$ is the expected value of x and $\sigma^2$ is the variance of the white noise.

Right after battery charging at time $t$, it is possible to predict a next battery state of charge at time $t+1$: $c_{t+1}$, then de-normalized as real predicted battery state of charge as

$$c_{t+1} = \frac{\hat{c}_{t+1} \cdot \hat{m}_t}{100}$$

It is further possible to allocate a stop threshold value for data collection by means of the charging behaviour model with the following formula:
stop threshold value = $\beta\sigma$ so that

$$\Delta = \hat{c}_{t+1} - \beta \cdot \sigma,$$

wherein $\Delta$ is a remaining amount of battery charge, which can be used for data collection and wherein $\beta$ is a safe coefficient to avoid draining the battery power completely since the prediction may comprise an error and $\sigma$ is a standard deviation of the battery charging behaviour model.

If the actual battery state of charge is lower than the stop threshold value the data collection may be stopped. As the battery charging behaviour model is dynamically estimated, it will adaptively learn the prediction.

In the battery charging behaviour model of Figure 1, only time t is taken into account when charging. However it is also possible to take other context, e.g. location, into account. Then it is possible to learn the charging context/location, and infer the charging opportunity, though the user has not charged the device yet. It can be used as charging recommendation if it runs out of battery, or can be integrated in the battery charging habit learning too.

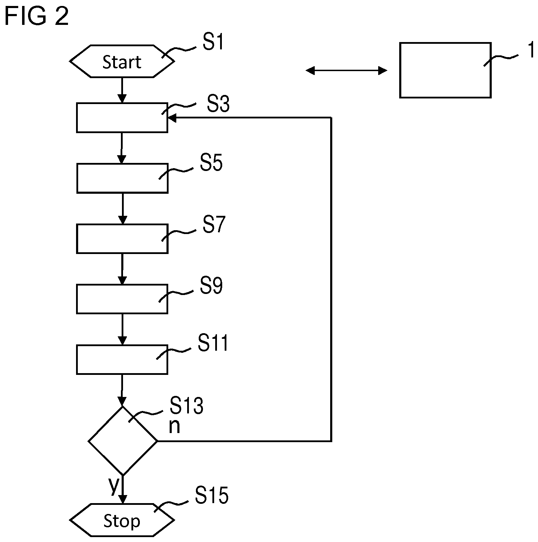

Figure 2 shows a flowchart of a first program for collecting data of the mobile device in a vehicle. The first program can be executed on a device 1. The device 1 may comprise a processor, a data and program memory and one or more interfaces to execute the first program. The mobile device may comprise the device 1.

In a step S1 the first program is started and, for example, variables are initialized.

In a step S3 collecting data of the mobile device is started.

The data to collect comprises, for example, context data, which is used for a given application and/or service. The data to collect comprises, for example, gps information, accelerometer values, gyroscope values, Bluetooth data, etc. The data is, for example, used for applications which help to provide less distractions to a driver and which provide the driver with the right information and the right time, and allows the driver to focus on the task at hand, which is driving. The data thus is used for applications with regards to navigation, finding points of interest, optimizing travel routes with fastest time and cost, and personalizing settings in the vehicle.

In a step S5 an actual battery state of charge is determined.

In a step S7 the battery charging behaviour model is provided.

In a step S9 the predicted next battery state of charge at time $t+1$: $\hat{c}_{t+1}$ is determined by means of the battery charging behaviour model.

In a step S11 the stop threshold value is determined.

In a step S13 the actual battery state of charge is compared with the stop threshold value. If the actual battery state of charge is larger or equal to the stop threshold value, the program is continued in the step S3. If the actual battery state of charge is smaller than the stop threshold value, the program is continued in a step S15.

In the step S15 the data collection is stopped and the first program is stopped and can, for example, be restarted in the step S1.

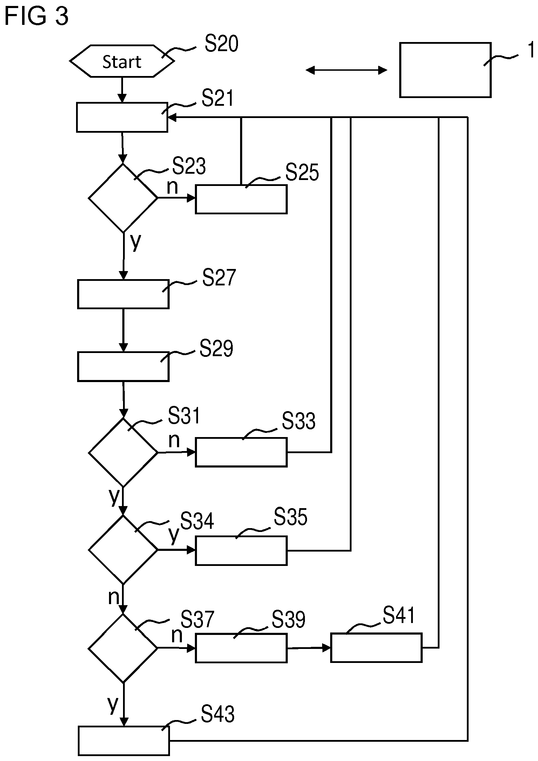

It is further possible to use a driving behaviour for the data collection. Figure 3 shows a flowchart of a second program for collecting data of the mobile device in a vehicle, which additionally uses the driving behaviour. The second program can be executed on the device 1.

The second program can be executed depending on the first program. Thus, for example, the second program is only executed as long as the actual battery state of charge is larger or equal to the stop threshold value.

In a step S20 the second program is started and, for example, variables are initialized.

In a step S21 it is determined if a vehicle in which the mobile device is located, is driving. If the vehicle is driving the second program is continued in a step S23.

In the step S23 the actual battery state of charge is compared with an upper threshold value. The upper threshold value is, for example, a given threshold, as 70, 80 or 90 % of a maximum battery state of charge. It is also possible to determine the upper threshold value depending on the battery charging behaviour model. Thus, the upper threshold value is representative for a good battery state of charge.

If the actual battery state of charge is larger than or equal to the upper threshold value, the second program is continued in a step S27. If the actual battery state of charge is smaller than the upper threshold value, the second program is continued in a step S25.

In the step S25 a data collection intensity is set to a low data collection intensity.

A higher data collection intensity means, for example, a higher frequency of data collection and/or a higher accuracy of data collection and/or more sources of data.

The data collection intensity may, for example be set to three states, a given first intensity, a given second intensity and a given third intensity.

A high data collection intensity, as, for example, the given first intensity, may comprise a high frequency sampling, e.g. every 200 m, a high accuracy, e.g. within 10 m and, for example, all context data which is required is collected, e.g. GPS, accelerometer, gyroscope, Bluetooth, etc.

A medium data collection intensity, as, for example, the given second intensity, may comprise a medium frequency sampling in between high and low, e.g. Every 1 km, a high accuracy, e.g. within 10 m, and, for example, all context data which is required is collected, e.g. GPS, accelerometer, gyroscope, Bluetooth, etc.

A low data collection intensity, as, for example, the given third intensity, may comprise a low frequency sampling, for example, only when significant change in location took place, a not so high accuracy, e.g. within 100 m and, for example, only some required context data is collected, e.g. GPS and Bluetooth.

In the step S27 the data collection intensity is set depending if the step S27 is executed the first time. If the step S27 is executed the first time, the data collection intensity is set to the high data collection intensity, as, for example, the given third intensity. If the step S27 is not executed the first time, the data collection intensity is not changed.

In a step S29 map data of a road map is provided. A position of the mobile device is determined and compared with the map data and depending on the comparison a predicted next point of the mobile device on the road map is determined.

The map data of the road map comprises, for example, map data of familiar routes, which a driver of the vehicle has taken before, and/or map data of routes of a given map.

In a step S31 it is checked if the predicted next point matches to a known road. If the predicted next point does not match to a known road, the second program is continued in a step S33. If the predicted next point matches to a known road, the second program is continued in a step S34.

In the step S33 the data collection intensity is set to a high data collection intensity, as, for example, the given first intensity. If the data collection intensity is already set to a high data collection intensity, as, for example, the given first intensity, the data collection intensity is not changed. After that, the second program is continued in the step S21.

In the step S34 it is checked if the predicted next point matches to a highway. If the predicted next point matches to a highway, the second program is continued in a step S35. If the predicted next point does not match to a highway, the second program is continued in a step S37.

In the step S35 the data collection intensity is set to a low data collection intensity, as, for example, the given third intensity. If the data collection intensity is already set to a low data collection intensity, as, for example, the given third intensity, the data collection intensity is not changed. After that, the second program is continued in the step S21.

In the step S37 it is checked if the predicted next point matches to a city road. If the predicted next point matches to a city road, the second program is continued in a step S43. If the predicted next point does not match to a city road, the second program is continued in a step S39.

In the step S39 it is determined that the predicted next point deviates from a known road. Afterwards the second program is continued in a step S41.

In the step S41 the data collection intensity is set to a high data collection intensity, as, for example, the given first intensity. If the data collection intensity is already set to a high data collection intensity, as, for example, the given first intensity, the data collection intensity is not changed. After that, the second program is continued in the step S21.

In the step S43 the data collection intensity is set to a medium data collection intensity, as, for example, the given second intensity. If the data collection intensity is already set to a medium data collection intensity, as, for example, the given second intensity, the data collection intensity is not changed. After that, the second program is continued in the step S21.

Optionally a personal battery charging behaviour model may be adapted according to a user's data collection that will change the charging behaviour as a user charges battery depending on the charging availability and battery level at the moment.

By using the charging behaviour model the data in the vehicle can be collected such that the data quality is accurate enough for an appropriate application/service and a sampling frequency is adequate for this application/service, while the mobile device battery consumption is considered and at the same time a good driver experience is provided. Thus, the data of the mobile device in a vehicle is very efficiently collected.

Reference Signs

S1 to S43    steps
1         device

**Claims**

**1.** Method for collecting data of a mobile device in a vehicle, wherein

- a battery charging behaviour model is determined, which is representative for an estimated charging behaviour of the mobile device, with the battery being a mobile device battery, wherein the charging behaviour model is a function of the battery states of charge of the mobile device over time,
- the data is collected depending on an actual battery state of charge and the battery charging behaviour model,
**characterized in that**
- depending on the battery charging behaviour model a stop threshold value is determined,
- the stop threshold value is compared with the actual battery state of charge, and if the actual battery state of charge is lower than the stop threshold value the data collection is stopped, wherein the stop threshold value is determined according to the formula:
stop threshold value = $\beta\sigma$ so that

$$\Delta = \hat{c}_{t+1} - \beta\sigma,$$

wherein $\Delta$ is a remaining amount of battery charge which can be used for data collection, $\hat{c}_{t+1}$ is a determined next start charging battery state of charge, which is determined depending on the battery charging behaviour model, $\beta$ is a given safe coefficient, and $\sigma$ is a standard deviation of the battery charging behaviour model.

**2.** Method according to claim 1, wherein the battery charging behaviour model is determined depending on former detected start charging times and/or former detected start charging battery states of charge and/or former detected start charging locations.

**3.** Method according to any of the claims 1 to 2, wherein

- an upper threshold value is determined depending on the battery charging behaviour model,
- the upper threshold value is compared with the actual battery state of charge,
- the data is collected depending on the result of the comparison of the upper threshold value with the actual battery state of charge.

**4.** Method according to claim 3, wherein

- the data collection is only started if the actual battery state of charge is higher than or equal to the upper threshold value.

**5.** Method according to claim 3 or 4, wherein

- a data collection intensity is regulated depending on the result of the comparison of the upper threshold value with the actual battery state of charge.

**6.** Method according to any of the claims 1 to 5, wherein

- a position of the mobile device is determined,
- map data of a road map is provided,
- the position of the mobile device is compared with the map data, to determine a predicted next point of the mobile device on the road map,
- a data collection intensity is regulated depending on the predicted next point of the mobile device on the road map.

**7.** Method according to claim 6, wherein

- if the predicted next point deviates from a road or does not match to a known road the data collection intensity is set to a given first intensity, wherein the known road is a road which a driver has taken before,
- if the predicted next point maps to a city road the data collection intensity is set to a given second intensity,
- if the predicted next point maps to a highway the data collection intensity is set to a given third intensity,
- wherein the given first intensity is higher than the given second intensity and the given second intensity is higher than the given third intensity.

**8.** Device (1), wherein the device is configured to execute the method according to any one of the claims 1 to 7.

**9.** Computer program product comprising instructions which, when the program is executed by a computer, cause the computer to carry out the method according to any one of the claims 1 to 7.


**Patentansprüche**

**1.** Verfahren zum Sammeln von Daten eines mobilen Endgeräts in einem Fahrzeug, wobei

- ein Batterieladeverhaltensmodell bestimmt wird, das für ein geschätztes Ladeverhalten des mobilen Endgeräts repräsentativ ist, wobei die Batterie eine Batterie eines mobilen Endgeräts ist und das Ladeverhaltensmodell eine Funktion der Batterieladezustände des mobilen Endgeräts im Zeitablauf ist, und
- die Daten abhängig von einem Ist-Batterieladezustand und dem Batterieladeverhaltensmodell gesammelt werden, **dadurch gekennzeichnet, dass**
- abhängig vom Batterieladeverhaltensmodell ein Anhalteschwellenwert bestimmt wird und
- der Anhalteschwellenwert mit dem Ist-Batterieladezustand verglichen wird und dann, wenn der Ist-Batterieladezustand niedriger als der Anhalteschwellenwert ist, die Datensammlung angehalten wird, wobei der Anhalteschwellenwert gemäß der folgenden Formel bestimmt wird:
Anhalteschwellenwert = $\beta\sigma$, derart, dass

$$\Delta = \hat{c}_{t+1} - \beta\sigma,$$

wobei
$\Delta$ eine verbleibende Menge Batterieladung ist, die zur Datensammlung verwendet werden kann, $\hat{c}_{t+1}$ ein bestimmter Batterieladezustand beim nächsten Start ist, der abhängig vom Batterieladeverhaltensmodell bestimmt wird, $\beta$ ein gegebener Sicherheitskoeffizient ist und $\sigma$ eine Standardabweichung des Batterieladeverhaltensmodells ist.

**2.** Verfahren nach Anspruch 1, wobei das Batterieladeverhaltensmodell abhängig von vorherigen detektierten Ladestartzeiten, vorherigen detektierten Startbatterieladezuständen und/oder vorherigen detektierten Startladeorten bestimmt wird.

**3.** Verfahren nach einem der Ansprüche 1 bis 2, wobei

- ein oberer Schwellenwert abhängig vom Batterieladeverhaltensmodell bestimmt wird,
- der obere Schwellenwert mit dem Ist-Batterieladezustand verglichen wird und
- die Daten abhängig vom Ergebnis des Vergleichs des oberen Schwellenwerts mit dem Ist-Batterieladezustand gesammelt werden.

**4.** Verfahren nach Anspruch 3, wobei

- die Datensammlung lediglich dann gestartet wird, wenn der Ist-Batterieladezustand größer oder gleich dem oberen Schwellenwert ist.

**5.** Verfahren nach Anspruch 3 oder 4, wobei

- eine Datensammlungsintensität abhängig vom Ergebnis des Vergleichs des oberen Schwellenwerts mit dem Ist-Batterieladezustand gesteuert wird.

**6.** Verfahren nach einem der Ansprüche 1 bis 5, wobei

- eine Position des mobilen Endgeräts bestimmt wird,
- Kartendaten einer Straßenkarte bereitgestellt werden,
- die Position des mobilen Endgeräts mit den Kartendaten verglichen wird, um einen vorhergesagten nächsten Punkt des mobilen Endgeräts in der Straßenkarte zu bestimmen, und
- eine Datensammlungsintensität abhängig vom vorhergesagten nächsten Punkt des mobilen Endgeräts in der Straßenkarte gesteuert wird.

**7.** Verfahren nach Anspruch 6, wobei

- dann, wenn der vorhergesagte nächste Punkt von einer Straße abweicht oder nicht mit einer bekannten Straße übereinstimmt, die Datensammlungsintensität auf eine gegebene erste Intensität gesetzt wird, wobei die bekannte Straße eine Straße ist, die der Fahrer vorab benutzt hat,
- dann, wenn der vorhergesagte nächste Punkt mit einer Stadtstraße übereinstimmt, die Datensammlungsintensität auf eine gegebene zweite Intensität gesetzt wird, und
- dann, wenn der vorhergesagte nächste Punkt mit einer Schnellstraße übereinstimmt, die Datensammlungsintensität auf eine gegebene dritte Intensität gesetzt wird, wobei
- die gegebene erste Intensität höher als die gegebene zweite Intensität ist und die gegebene zweite Intensität höher als die gegebene dritte Intensität ist.

**8.** Einrichtung (1), wobei die Einrichtung konfiguriert ist, das Verfahren nach einem der Ansprüche 1 bis 7 auszuführen.

**9.** Computerprogrammprodukt, das Anweisungen enthält, die, wenn das Programm durch einen Computer ausgeführt wird, bewirken, dass der Computer das Verfahren nach einem der Ansprüche 1 bis 7 durchführt.

**Revendications**

**1.** Procédé permettant de recueillir des données d'un dispositif mobile dans un véhicule, selon lequel :

- on détermine un modèle de comportement de charge de batterie qui est représentatif d'un comportement de charge évalué du dispositif mobile, la batterie étant une batterie du dispositif mobile, le modèle de comportement de charge étant une fonction des états de charge de la batterie du dispositif mobile en fonction du temps,
- on recueille les données en fonction de l'état de charge actuelle de la batterie et du modèle de comportement de charge de la batterie,
**caractérisé en ce que**

- on détermine en fonction du modèle de comportement de charge de la batterie une valeur de seuil d'arrêt,
- on compare la valeur de seuil d'arrêt à l'état de charge actuelle de la batterie, et si l'état de charge actuel de la batterie est inférieur à la valeur de seuil d'arrêt on arrête la collecte de données, la valeur de seuil d'arrêt étant déterminée conformément à la formule :

valeur de seuil d'arrêt = $\beta\sigma$, de sorte que :

$$\Delta = \hat{c}_{t+1} - \beta\sigma,$$

dans laquelle $\Delta$ représente la quantité de charge restante de la batterie qui peut être utilisée pour la collecte de données, $\hat{c}_{t+1}$ représente l'état de charge de la batterie au début de la charge suivante qui est déterminé en fonction du modèle du comportement de charge de la batterie, $\beta$ représente un coefficient de sécurité donné et $\sigma$ représente la déviation standard du modèle de comportement de charge de la batterie.

2. Procédé conforme à la revendication 1,
selon lequel le modèle de comportement de charge de la batterie est déterminé en fonction de temps de début de charge détectés auparavant et/ou d'états de charge de la batterie en début de charge détectés auparavant et/ou de lieux de début de charge détectés auparavant.

3. Procédé conforme à l'une quelconque des revendications 1 et 2,
selon lequel :
on détermine une valeur de seuil supérieure sur le fondement du modèle de comportement de charge de la batterie,

   - on compare la valeur de seuil supérieure avec l'état de charge actuel de la batterie,
   - on recueille les données en fonction du résultat de la comparaison de la valeur de seuil supérieure avec l'état de charge actuel de la batterie.

4. Procédé conforme à la revendication 3,
selon lequel on commence la collecte de données uniquement si l'état de charge actuel de la batterie est supérieur ou égal à la valeur de seuil supérieure.

5. Procédé conforme à la revendication 3 ou 4,
selon lequel on règle l'intensité de la collecte de données sur le fondement du résultat de la comparaison de la valeur de seuil supérieure avec l'état de charge actuel de la batterie.

6. Procédé conforme à l'une quelconque des revendications 1 à 5,
selon lequel :

   - on détermine la position du dispositif mobile,
   - on se procure des données cartographiques d'une carte routière,
   - on compare la position du dispositif mobile avec les données cartographiques pour déterminer un prochain point prévu du dispositif mobile sur la carte routière,
   - on règle l'intensité de collecte de données sur le fondement du prochain point prévu du dispositif mobile sur la carte routière.

7. Procédé conforme à la revendication 6,
selon lequel :

   - si le prochain point prévu s'écarte d'une route ou ne correspond pas à une route connue, on règle l'intensité de collecte de données sur une première intensité donnée, la route connue étant une route que le conducteur a empruntée auparavant,
   - si le prochain point prévu correspond à une voie urbaine, on règle l'intensité de collecte de données sur une seconde intensité donnée, et
   - si le prochain point prévu correspond à une autoroute, on règle l'intensité de collecte de données sur une troisième intensité donnée,
   - la première intensité donnée étant supérieure à la seconde intensité donnée et la seconde intensité donnée étant supérieure à la troisième intensité donnée.

**8.** Dispositif (1), ce dispositif étant réalisé pour permettre la mise en oeuvre du procédé conforme à l'une quelconque des revendications 1 à 7.

**9.** Produit programme d'ordinateur comprenant des instructions qui, lorsque le programme est exécuté par un ordinateur commandent l'ordinateur pour mettre en oeuvre le procédé conforme à l'une quelconque des revendications 1 à 7.

FIG 1

FIG 2

```
        ┌─────────┐
       ⟨  Start   ⟩─── S1
        └────┬────┘
             │
        ┌────▼────┐
        │         │─── S3 ◄──────────┐
        └────┬────┘                  │
             │                       │
        ┌────▼────┐                  │
        │         │─── S5            │
        └────┬────┘                  │
             │                       │
        ┌────▼────┐                  │
        │         │─── S7            │
        └────┬────┘                  │
             │                       │
        ┌────▼────┐                  │
        │         │─── S9            │
        └────┬────┘                  │
             │                       │
        ┌────▼────┐                  │
        │         │─── S11           │
        └────┬────┘                  │
             │                       │
            ◇─── S13                 │
           ╱ ╲    n ─────────────────┘
           ╲ ╱
            ◇
             │ y
        ┌────▼────┐
       ⟨  Stop    ⟩─── S15
        └─────────┘
```

```
        ┌──────────┐
◄──────►│          │─── 1
        └──────────┘
```

FIG 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090315767 A1
- US 50892346 A
- US 6975941 B1
- US 7359713 B1
- US 20020105442 A1
- US 8655307 B1

**Non-patent literature cited in the description**

- **PETER J. BROCKWELL RICHARD A. DAVIS.** Introduction to Time Series and Forecasting. Springer Press